(19) Europäisches Patentamt
European Patent Office
Office européen des brevets

(11) EP 2 324 406 B1

(12) **EUROPEAN PATENT SPECIFICATION**

(45) Date of publication and mention
of the grant of the patent:
**30.01.2019 Bulletin 2019/05**

(51) Int Cl.:
*G06F 1/26* (2006.01)      *G06F 1/28* (2006.01)

(21) Application number: **09759238.0**

(22) Date of filing: **02.06.2009**

(86) International application number:
**PCT/US2009/045963**

(87) International publication number:
**WO 2009/149078 (10.12.2009 Gazette 2009/50)**

(54) **METHOD AND APPARATUS FOR MONITORING THE PERFORMANCE OF A POWER DELIVERY CONTROL SYSTEM**

VERFAHREN UND VORRICHTUNG ZUM ÜBERWACHEN DER LEISTUNGSFÄHIGKEIT EINES LEISTUNGSABLIEFERUNGS-STEUERSYSTEMS

PROCÉDÉ ET APPAREIL POUR SURVEILLER LES PERFORMANCES D'UN SYSTÈME DE COMMANDE DE PUISSANCE DE SORTIE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **02.06.2008   US 58207**

(43) Date of publication of application:
**25.05.2011   Bulletin 2011/21**

(73) Proprietor: **ABB Schweiz AG**
**5400 Baden (CH)**

(72) Inventors:
• VETTER, Claus
  **CH-5033 Buchs (CH)**
• SINCERBOX, Chris
  **Missouri City**
  **TX 77459 (US)**
• MCDANIEL, David
  **Sugar Land**
  **TX 77478 (US)**
• SHARER, Karlene
  **Sugar Land**
  **TX 77478 (US)**

(74) Representative: **ABB Patent Attorneys**
**c/o ABB Schweiz AG**
**Intellectual Property CH-IP**
**Brown Boveri Strasse 6**
**5400 Baden (CH)**

(56) References cited:
**WO-A-01/22186      KR-A- 20000 049 529**
**US-A- 6 145 098**

**Description**

BACKGROUND OF THE INVENTION

The invention relates to control systems and more particularly to the monitoring and supervision of the behavior of power delivery control systems.

Power delivery control systems include supervisory control and data acquisition (SCADA) systems, distribution management systems (DMS), energy management systems (EMS) and generation management systems (GMS). Such systems are required to have high availability and reliability because of their importance to the public.

Since the first development of remote control systems for power plants in the 1920's and 1930's (such as by ASEA AB and the Brown Boveri Company) power control systems have evolved into powerful and sophisticated information technology (IT) systems, which enable utilities to efficiently manage their grids and reliably deliver power to end users. In order to maintain the reliability and availability of these sophisticated control systems, it is important to detect and identify failures in the control systems and to analyze error conditions after they have occurred in order to prevent failures in the future.

Software tools are available for monitoring and supervising the behavior of computers. These tools, however, are often provided by computer vendors and/or operating system vendors and are usually limited to operating system (O/S) tools. Moreover, these and other available conventional tools have the following drawbacks: (1.) the tools cannot collect and store data at the frequency needed in control systems (i.e., sub-second in some cases); (2.) the data available from the tools is not granular enough (in time intervals and in data values) for troubleshooting; (3.) the tools have large CPU/memory/disk/network footprints, which can further cause problems to the system; (4.) tools from different vendors are not able to correlate data because they collect data at different cycle times; and (5.) data is presented in different formats or displays which makes the viewing and analysis of the data tedious, error-prone and slow.

Specific example of conventional O/S tools include O/S standard counter tools (i.e. vmstat, iostat) and O/S customized kernel tools (i.e. glance, collect). The data produced by the O/S standard counter tool is not historical in nature and is not tied to any particular process action. Data provided by the O/S customized kernel tools is not granular enough, is not standardized and is not tailored to the application running on the system. Thus, data from different types of resources used by the application cannot be gathered and stored in one collection cycle.

Data provided by application tools (e.g. power system application, database applications, etc.) in general are very granular and are not designed for historical usage or run time monitoring. In addition, these tools were developed to diagnosis specific and isolated problem areas and are typically not adapted for use in an environment utilizing a combination of systems, servers, applications and communication protocols, such as a modern power delivery control system. Individual tools running in combination utilize a significant amount of hardware and software resources, which increases the overall load on the system, which runs counter to a reason for using the tools in the first place. US6145098A discloses a computer system for obtaining, displaying or updating the status of server components through a remote interface and either a client machine, without intervention of the server operating systems.

Based on the foregoing, there is a need for a monitoring tool adapted for use in control systems. The present invention is directed to such a monitoring tool.

SUMMARY OF INVENTION

In accordance with the present invention, a computer-implemented method is provided for monitoring the operation of a control system adapted to monitor and control a power delivery operation. The control system has a plurality of computers. Each of the computers has a central processing unit (CPU) with an operating system running thereon and each of the operating systems has one or more kernel interfaces. In accordance with the method, a determination is made of what processes are running on each computer. Threshold criteria for data collection are received. Initial data is collected based on the processes running on each computer. The initial data is time stamped. A determination is made whether the initial data meets any of the threshold criteria. If the initial data meets any of the threshold criteria, additional data is collected based on the threshold criteria that has been met. The additional data is time stamped. The initial data and the additional data is correlated using the time stamps and/or characteristics of the running processes. The correlated, collected data may then be displayed. The kernel interfaces are used to collect the initial set of data and the additional data.

Also provided in accordance with the present invention is a control system adapted to monitor and control a power delivery operation. The control system includes field equipment, one or more remote terminal units (RTUs) associated with the field equipment and a plurality of computers including a data acquisition computer adapted to receive data from the one or more RTUs and an application computer operable to execute an application for controlling one or more of the field devices. Each of the computers includes a central processing unit (CPU) and computer readable media containing operating system software with one or more kernel interfaces and a monitoring tool, which when executed by the CPU performs a method of monitoring the operation of the computer. In accordance with the method, a determination is made of what processes are running on the computer. Threshold criteria for data collection are received. Initial data is collected based on the processes running on the computer. The initial data is time stamped. A determination is made whether the initial data meets any of the threshold criteria. If the initial data meets any of the threshold criteria, additional data is collected based on the threshold criteria that have been met. The additional data is time stamped. The initial data and the additional data are correlated using the time stamps and/or characteristics of the running processes. The correlated, collected data may then be displayed. The kernel interfaces are used to collect the initial set of data and the additional data.

BRIEF DESCRIPTION OF THE DRAWINGS

The features, aspects, and advantages of the present invention will become better understood with regard to the following description, appended claims, and accompanying drawings where:

Fig. 1 is a schematic of a control system for a power delivery operation;
Fig. 2 is a screen shot in a graphical user interface (GUI) of a computer in the control system, wherein the screen shot shows a process tree of the computer;
Fig. 3 is a flow chart of a method performed by a monitoring tool of the present invention;
Fig. 4 is a screen shot in a GUI of a computer in the control system, wherein the screen shot shows collected process data;
Fig. 5 is a screen shot in a GUI of a computer in the control system, wherein the screen shot shows collected CPU states data; and
Fig. 6 is a screen shot in a GUI of a computer in the control system, wherein the screen shot shows collected process data.

BRIEF DESCRIPTION OF ILLUSTRATIVE EMBODIMENTS

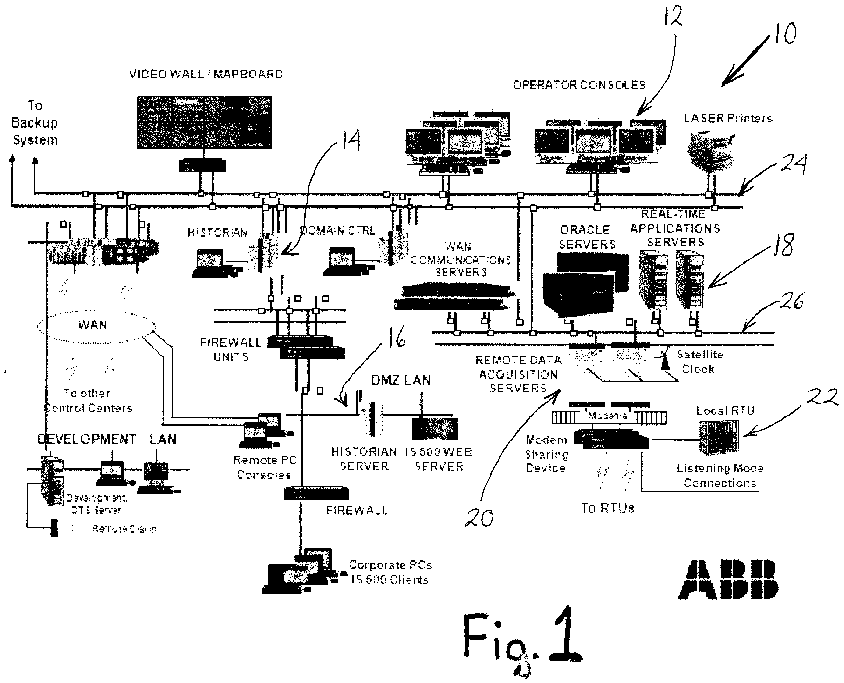

It should be noted that in the detailed description that follows, identical components have the same reference numerals, regardless of whether they are shown in different embodiments of the present invention. It should also be noted that in order to clearly and concisely disclose the present invention, the drawings may not necessarily be to scale and certain features of the invention may be shown in somewhat schematic form.
Referring now to Fig. 1, there is shown a SCADA system 10 adapted to monitor and control a power delivery operation. The SCADA system 10 generally includes one or more operator consoles 12, a historian computer 14, a historian server computer 16, one or more real-time application server computers 18, one or more data acquisition server computers 20 and one or remote terminal units (RTUs) 22.
Each operator console 12 may be a personal computer (PC) with a central processing unit (CPU) and a monitor for providing visual displays to an operator. A graphical user interface (GUI) runs on each operator console 12 and is operable to display a plurality of different views or windows on the monitor.
Each of the computers in the SCADA system 10 has an operating system. As is well known, an operating system is system software responsible for the control and management of computer resources. A typical operating system enables communication between application software and the hardware of a computer. The operating system allows applications to access the hardware and basic system operations of a computer, such as disk access, memory management, task scheduling, and user interfacing. Additionally, an operating system is also responsible for providing network connectivity. The operating systems of the computers in the SCADA system 10 may be Windows® operating systems available from Microsoft Corporation or different types of Unix operating systems (Tru64, HP-UX, Linux) available from vendors such as Hewlett Packard, Sun Microsystems, IBM, RedHat, SUSE, etc.
Each operating system of each computer in the SCADA system 10 has kernel interfaces. A kernel interface is a low-level communication bridge between a process (application program) and the kernel of the operating system. A kernel interface for a process typically includes entry points and calling conventions. Entry points are where the execution of a process enters the kernel, while calling conventions control how function arguments are passed to the kernel and how return values are retrieved.
A kernel interface of an operating system may include functions to start and stop threads of execution, to synchronize threads of execution, to read and write data from files, to enlist in regions of shared memory, to draw on a screen, to communicate with a network, or to read a system clock. Kernel interfaces can range from dozens of entry points to hundreds and even thousands of entry points.
A kernel interface is one component of the operating system's application programming interface (API) presented to programmers. An API typically defines the interface between an application programmer's source code and operating system libraries so that the same source code will compile on any system supporting the API. Many conventional operating systems encapsulate the kernel interface within a higher-level API because the kernel interface varies from version to version of the kernel.

The operator console(s) and the historian computer 14 are connected to a first network 24, while the applications server computers 18 and the data acquisition server computers 20 are connected to a second network 26. The first and second networks 24, 26 may each comprise a pair of redundant Ethernet cables over which information is communicated using the TCP/IP protocol.

The RTUs 22 are microprocessor-based devices that are associated with field equipment in an electrical distribution system, such as re-closers, relays, switches, interrupters, capacitor banks, etc. The RTUs 22 are essentially communication interfaces and may be integrated directly into the field equipment, or, more often, are connected to the field equipment as external communication units. The RTUs 22 are periodically interrogated or "polled" by data acquisition server computers 20, and the RTUs 22 respond with data gathered from their associated field equipment or systems. The interrogation may be specific (meaning that the data acquisition server computers 20 contact a specific RTU 22 using some form of unique identifier), or global (in which case the data acquisition server computers 20 sends a single poll and all of the RTUs 22 that receive the poll respond sequentially according to some predetermined order of response). The RTUs 22 may communicate with the data acquisition server computers 20 using the distributed network protocol (DNP), which is an open protocol that is used for control and communication in SCADA systems. The DNP handles three types of data: binary, analog and counter. Counter data represents count values, such as kilowatt hours, that increase until they reach a maximum and then roll over to zero and start counting again. The DNP is not a general purpose protocol for transmitting hypertext, multimedia or huge files. DNP 3.0 is the most current version of DNP.

The application server computers 18 may execute one or more applications for controlling and/or optimizing the performance of the power delivery operation using field information, such as may be obtained from the data acquisition server computers 20.

Copies of a monitoring (software) program or tool 50 run on one or more of the computers of the SCADA system 10, such as on the operator consoles 12 and/or the applications server computers 18 and/or the data acquisition server computers 20. A computer upon which a copy of the monitoring software program runs shall hereinafter be referred to as a "host computer". In one embodiment of the present invention, a copy of the monitoring tool 50 is installed on each computer in the SCADA system 10. In this embodiment, the copies of the monitoring tool 50 communicate with each other and one of the copies may act as a "master" that can control the other copies. Each copy of the monitoring tool 50 may be executed automatically upon start-up of the host computer, upon command of an operator, or upon command of another computer program. In one embodiment of the present invention, the monitoring tool 50 is an autonomous independent process that is started automatically at operating system reboot on all computers that are part of the SCADA system 10.

On each host computer, the monitoring tool 50 is stored in memory and executed by a central processing unit (CPU) of the host computer. The monitoring tool 50 includes a graphical user interface (GUI) that is displayed on a monitor of the host computer. In order to present data for pattern recognition, the GUI may display all collected data at the same time interval with graphs of data where appropriate. In addition, the GUI may be used to: (i) filter on a particular data type and time on run-time or on historical data, (ii) generate and display graphs and detailed data in a side-by-side manner, (iii) generate and display color coded high water marks for data, and (iv) generate and display landscapes of processes in a manner that allows for easy identification of trouble spots.

The monitoring tool 50 has the following run time properties: (1.) the monitoring tool 50 executes constantly as a background process; (2.) the monitoring tool 50 is natively compiled with a very small compact data and code section; (3.) the monitoring tool 59 is capable of running on multiple operating platforms; (4.) the monitoring tool 50 uses vendor supplied kernel interfaces for data sources; (5.) the monitoring tool 50 does not use kernel symbol mapping methods; (6.) the monitoring tool 50 runs under the context of a privileged user; (7.) the monitoring tool 50 favors a higher priority setting than most other applications; (8.) the monitoring tool 50 runs on an internal cyclic timer at a frequency of under one second; and (9.) the monitoring tool 50 does not, at any time, consume more than five percent of the CPU processing utilization of its host computer; and (10.) the monitoring tool 50 utilizes less than 10 percent of 1 percent of the total memory of its host computer.

The monitoring tool 50 initially creates space in the memory of the host computer to store selected process/thread data for up to 10000 separate entries. Entries in the internally maintained thread/process table are indexed using a simple hash formula of:

$$\text{HASH\_INDEX} = (\text{THREAD\_ID} << 1 \% 10000).$$

Where HASH_INDEX is the index into the local thread table THREAD_ID is the operating system identifier for the thread << 1 is a single bit shift left operation
% 10000 is a modulo 10000 operation

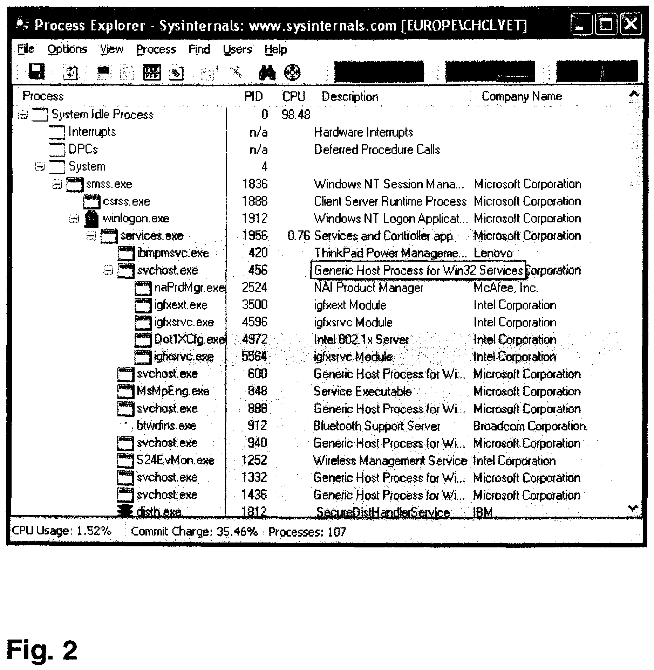

The monitoring tool 50 monitors and analyzes the process structure of the host computer. The process structure of the host computer is the various executable software programs (processes) that are installed and runnable on the host computer. Referring now to Fig. 2, there is shown a screen shot of a process explorer window of a host computer (such as one of the operator consoles 12) partially showing the process structure of the host computer. As shown, the process structure includes "winlogon" (a logon process), "Smss" (a session manager service) and "timesync" (a time synchronization service).

Initially an inventory is taken of machine vital configuration information such as number of disks/CPUs, memory size and network capacity. This configuration information may be included in a report generated by the monitoring tool 50. On the start of a collection cycle, standard metrics for CPU, memory, disk, process/thread, inter-process communication methods and network usage are collected, stored, collected again and then analyzed. When a configurable threshold of usage has been crossed for any of the standardized metrics or a combination of metric rules has been met, a detailed collection processing is started within the same processing cycle. This incident information is stored into a separate time-stamped file. Once an incident has been reported, a backoff time algorithm is used to prevent incident files from appearing at a high frequency.

The monitoring tool 50 collects data from a host computer using only kernel interfaces. The monitoring tool 50 may selectively collect data for a particular time interval from each process using the kernel interface to the process. The data that may be collected by the monitoring tool 50 from the processes of a host computer include CPU, disk, memory, network and process statistics; utilization percentages (overall, process); process/thread state percentages; run queue averages; interrupts processed; context switches performed; and system calls made. The data that is collected by the monitoring tool 50 is time stamped using a system timestamp of the SCADA system 10 or external clocks.

The monitoring tool 50 permits the correlation of different data types using timestamps and/or process analysis. For example, the monitoring tool 50 may correlate data from those processes that execute at the same time, as determined from time stamps. The monitoring tool 50 may also correlate data from those processes that use the same file I/O. The monitoring tool 50 may also trace process dependencies, i.e., parent-child relationships, such as are shown in the tree of Fig. 2.

As set forth above, the monitoring tool 50 uses threshold settings to start and stop the collection and storage of detailed data. The threshold settings may be user-selectable through the GUI of the host computer. Collected detailed data may be stored in, and retrieved from, the historian server computer 16 by the historian computer 14. An example of the use of a threshold setting to start and stop detailed data collection may be system CPU utilization of 75%. When system CPU utilization is greater than 75%, the monitoring tool 50 may start to collect, timestamp and store all data available from the kernel interfaces. When the system CPU utilization thereafter falls below 65%, the monitoring tool 50 may stop collecting and storing data available from the kernel interfaces. Another example of a threshold that may be used to start data collection is file swapping. If file swapping becomes active, data on memory usage may be collected, time stamped and stored.

More examples of detailed collection processes and the metrics (thresholds) that trigger them are as follows:

| Standard Metric (threshold crossed) | Detailed Collection |
|---|---|
| CPU usage | Call frames of top thread consumers of CPU |
| Memory usage | Call frames of top thread consumers of memory. Historical memory utilization report of top thread consumers of memory from last collection cycle to current collection cycle. |
| Network usage | Detailed socket activity report on a per thread basis |
| Disk usage | Detailed file activity report on a per thread basis |
| Context switch rate | Call frames of all threads. Historical CPU utilization report of top thread consumers of CPU from last collection cycle to current collection cycle. |
| Queue activity | Call frame of last process/thread that had done a successful queue operation. |
| Semaphore activity | Call frame of process holding semaphore |
| Network response latency | Detailed socket activity report on a per thread basis. Historical socket utilization report of top thread consumers of socket resources from last collection cycle to current collection cycle. |

None of the detailed data collection processes impedes the host computer or the SCADA system 10. The detailed data collection processes do not affect any of the running threads/processes. The call frame reports are done with and without program symbols. Combinations of varying standard metrics thresholds are used to generate detailed collection reports.

An example of a detailed call frame analysis on a thread would be:

| Module Name | Line Number | Instruction Pointer | Thread # |
| --- | --- | --- | --- |

An example of the elements contained in the detailed file activity report on a per thread basis would be:

| Thread Name | File Name | File ID | Bytes Written | Bytes Read |
| --- | --- | --- | --- | --- |

An example of a detailed socket activity report on a per thread basis would be:

| Thread Name | Source IP address | Destination IP address | Bytes Written | Bytes Read | Socket ID |
| --- | --- | --- | --- | --- | --- |

Standard metrics are collected and stored into a data memory queue by the monitoring tool 50. A separate log archiving process reads the data memory queue and writes a compact secure binary record to a disk (non-volatile memory) of the host computer. The data written to disk is appended with a time-stamp (in milliseconds granularity) and a record identifier. The data can be stored for up to one month in a revolving fashion.

Exceeding a threshold setting may also be used to increase or reduce the rate at which data is captured and stored.

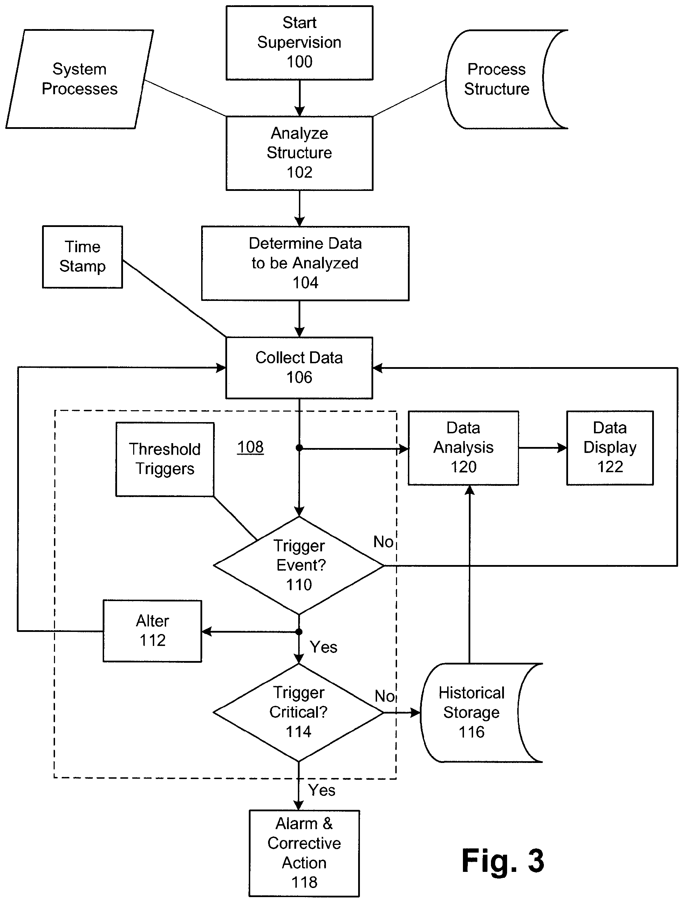

A flow chart of a method performed by the monitoring tool 50 is shown in Fig. 3. The method begins in a first step 100 that occurs upon boot-up of the operating system of the host computer. In step 102, the current configuration of the host computer is determined and memory is initialized to hold repeated metrics (e.g. process data). From step 102, the method proceeds to step 104, where the metrics to be analyzed and the rates at which they are to be analyzed are loaded. For example, if an Oracle database process is running on a host computer, the monitoring tool 50 will determine that the file input/output process for the database needs to be monitored and analyzed at a particular frequency. The thresholds to be considered are also loaded in step 104. From step 104, the method proceeds to step 106, where data is collected from kernel sources and is time stamped. After step 106, collected data is transmitted to step 108. In step 108, the collected data is correlated using the thresholds and correlation rules. Step 108 includes step 110 where a determination is made whether the collected data exceeds any of the thresholds, i.e., whether a trigger event has occurred. If a trigger event has occurred, the method branches to steps 112 and 114. In step 112, the type and/or amount of data to be collected is altered (i.e., the data collection criteria is changed) and then the method continues back to step 106 where the different/additional data is collected. The different/additional data may be collected to provide more detail for root cause analysis. In step 114, a determination is made whether the trigger event is critical. If the trigger event is critical, the method proceeds to step 118 where an alarm is issued and corrective action is taken. If the trigger event is not critical, the method proceeds to step 116 where the collected data is stored. The collected data may be stored in non-volatile memory of the host computer and/or transmitted from the host computer to the historian server computer 16, where the collected data is stored. After step 116, correlation output events are transmitted to step 120, where the collected data and the correlation output events may be automatically or manually processed to detect patterns of resource use and problem discovery. From step 120, the method proceeds to step 122 where information is displayed in the GUI of the host computer. This information may be composite graphed with considerations for incident data.

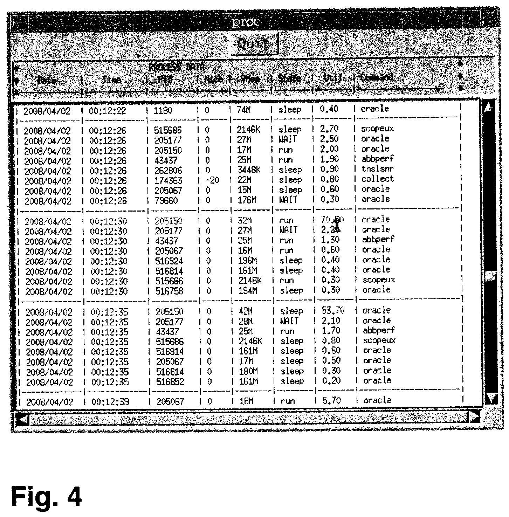

Figures 4-6 contain data samples for three resource metrics, as displayed by the GUI of a host computer, showing specific usage spikes for one or more data points. Fig. 4 is a filter display with time stamp correlation. "PID" refers to process ID (a unique number). "NICE" directly maps to a kernel call of the same name. For a given process, it changes the priority in the kernel's scheduler. A niceness of -20 is the highest priority and 19 is the lowest priority. The default niceness for processes is inherited from its parent process, usually 0. "VMEM" is virtual memory used. "Util" is percent of resource utilization.

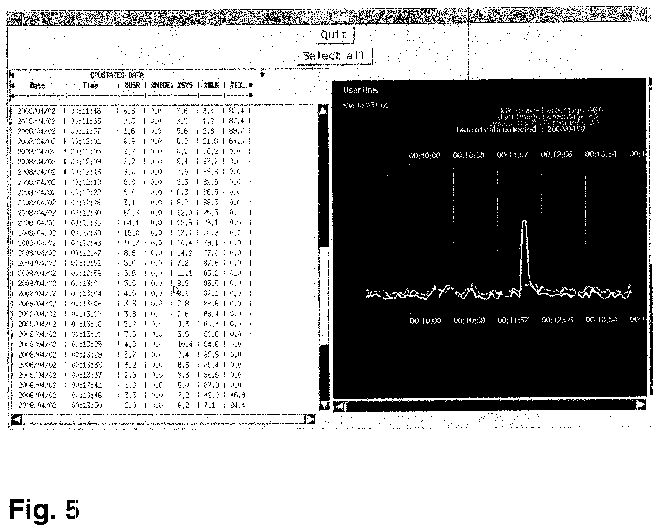

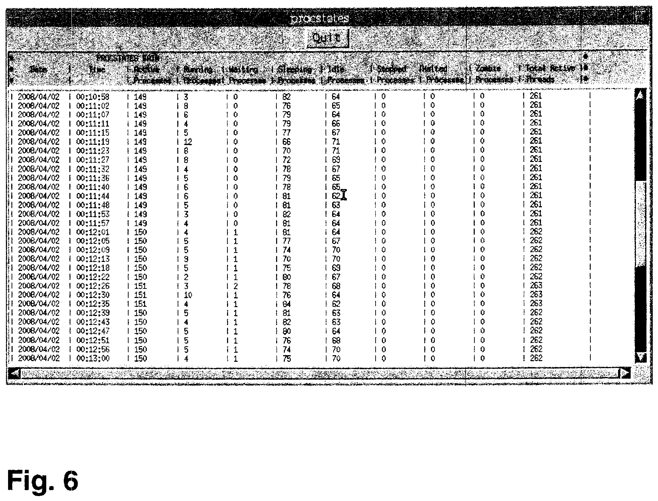

As illustrated in Figure 5, at Time 00:12:30, the CPU utilization suddenly spikes to a high percentage (from 3.1 to 62.3). By analyzing other collected resource metrics such as the process states, as illustrated in Figure 4, processes are found to be in an I/O wait state. The I/O blocking state seems to cause a spike in the number of running processes as illustrated in Figure 6. This type of simple correlation can be used to determine that an I/O bound process is slowing down other processes that may have shared dependencies of similar resources. The correlation processing would take the next step and dump the call frames of the I/O bound process (to analyze the location in the code which is I/O bound) at the moment it went into a I/O wait state as well as a file activity report for the process. The incident report would be followed by another incident report that is generated when the running process count threshold has been crossed (after an I/O wait state incident has been generated). The second incident report would output all of the call frames for the burst of running processes and a detailed file activity report for each. In this way the I/O wait state can be understood as well as any shared dependencies.

Based on the analysis of collected data, recovery actions may be invoked, such as (i) process restarts, (ii) forced shutdown of zombie processes, and/or (iii) forced shutdown of other processes to shed load from available relevant system parts.

As can be appreciated from the foregoing description, the monitoring tool 50 of the present invention has a number of beneficial features, while meeting control system standards for reliability, availability and security. The monitoring tool 50 provides an optimized process for collecting, analyzing, correlating and historically storing operating system and application resource metrics on multiple operating system platforms. The process collects control system specific resource metrics at a high frequency while maintaining a minimal resource usage footprint. The resource metrics are collected at the same time interval and are tailored for support of highly available near real-time systems. Data of different types (e.g. application and system specific) is collected and correlated and may be used for post-disturbance analysis. The GUI of the monitoring tool 50 allows display of all collected data at the same time interval with graphs of data where appropriate.

The monitoring tool 50 permits thresholds of different resource metrics to be applied at the same time, which enables the monitoring tool 50 to identify processes/threads causing instability, which, in turn, enables more detailed process/thread information to be collected in the same collection cycle. All of this facilitates root cause analysis and recovery actions. Alerts can also be generated for early warning notification. A historical state of the process/threads is maintained in non-volatile memory of the host computer and/or in the historian server computer 16.

The speed of the monitoring tool 50 is particularly advantageous and enables the monitoring tool 50 to be used in important control and monitoring applications, such as in the SCADA system 10. For example (and with reference to the flow chart in Fig. 3), the monitoring tool 50 can determine whether collected data exceeds any threshold (step 108) and if so, alter data collection criteria (step 112) and collect the different/additional data (step 106), including time stamping, all in one second or less.

As will be appreciated by one of ordinary skill in the art, the present invention may be embodied as or take the form of the method and system previously described, as well as of a computer readable medium having computer-readable instructions stored thereon which, when executed by a processor, carry out the operations of the present inventions as previously described and defined in the corresponding appended claims. The computer-readable medium may be any medium that can contain, store, communicate, propagate, or transport the user-interface program instruction for use by or in connection with the instruction execution system, apparatus, or device and may by way of example but without limitation, be an electronic, magnetic, optical, electromagnetic, infrared, or semiconductor system, apparatus, device, or propagation medium or other suitable medium upon which the program is printed. More specific examples (a non-exhaustive list) of the computer-readable medium would include: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Computer program code or instructions for carrying out operations of the present invention may be written in any suitable programming language provided it allows achieving the previously described technical results.

**Claims**

1. A computer-implemented method of monitoring the operation of a control system (10) adapted to monitor and control a power delivery operation, the control system (10) having a plurality of computers (12, 18, 20), each of the computers (12, 18, 20) having a central processing unit, CPU, with an operating system running thereon and each of the operating systems having one or more kernel interfaces, the method comprising:

   (a.) determining (102) what processes are running on each computer (12, 18, 20);
   (b.) receiving (104) threshold criteria for data collection;
   (c.) collecting (106) initial data based on the processes running on each computer (12, 18, 20);
   (d.) time stamping (106) the initial data;
   (e.) determining (110) whether the initial data meets any of the threshold criteria;
   (f.) if the initial data meets any of the threshold criteria, collecting (112, 106) additional data based on the threshold criteria that have been met;
   (g.) time stamping (106) the additional data;
   (h.) correlating the initial data and the additional data using the time stamps and/or characteristics of the running processes; and

wherein the kernel interfaces are used to collect the initial set of data and the additional data.

2. The method of claim 1, wherein the method is performed while the control system (10) is controlling and monitoring the power delivery operation.

3. The method of claim 2, wherein each of the computers (12, 18, 20) performs the method, wherein the performance of the method by each computer (12, 18, 20) consumes less than five percent of the CPU processing utilization of the computer (12, 18, 20).

4. The method of claim 2, wherein the control system (10) is a SCADA system and the computers (12, 18, 20) comprise one or more data acquisition server computers (20).

5. The method of claim 4, wherein the control system (10) comprises a plurality of remote terminal units, RTUs, (22) that communicate with the one or more data acquisition server computers (20) using distributed network protocol, DNP.

6. The method of claim 1, wherein the step of correlating comprises determining the processes that execute at the same time as determined from the time stamps.

7. The method of claim 1, wherein the step of receiving (104) threshold criteria for data collection is performed through a graphical user interface, GUI.

8. The method of claim 1, wherein the threshold criteria comprise a CPU usage limit for each computer (12, 18, 20), and wherein when the CPU usage limit is exceeded for one of the computers (12, 18, 20), the additional data that is collected comprises call frames of top thread consumers of the CPU of the one of the computers (12, 18, 20).

9. A control system (10) adapted to monitor and control a power delivery operation, the control system (10) comprising:

field equipment;
one or more remote terminal units, RTUs, (22) associated with the field equipment;
a plurality of computers (12, 18, 20) including a data acquisition computer (20) adapted to receive data from the one or more RTUs (22) and an application computer (18) operable to execute an application for controlling one or more of the field devices, each of the computers (12, 18, 20) comprising a central processing unit, CPU, and computer readable media containing operating system software with one or more kernel interfaces and a monitoring tool (50), which when executed by the CPU performs a method of monitoring the operation of the computer (12, 18, 20), the method comprising:

(a.) determining (102) what processes are running on the computer (12, 18, 20);
(b.) receiving (104) threshold criteria for data collection;
(c.) collecting (106) initial data based on the processes running on the computer (12, 18, 20);
(d.) time stamping (106) the initial data;
(e.) determining (110) whether the initial data meets any of the threshold criteria;
(f.) if the initial data meets any of the threshold criteria, collecting additional (112, 106) data based on the threshold criteria that have been met;
(g.) time stamping (106) the additional data;
(h.) correlating the initial data and the additional data using the time stamps and/or characteristics of the running processes; and

wherein the kernel interfaces are used to collect the initial set of data and the additional data.

10. The control system (10) of claim 9, wherein the method is performed while the control system (10) is controlling and monitoring the power delivery operation.

11. The control system (10) of claim 10, wherein in each computer (12, 18, 20), the monitoring tool (50) automatically starts to execute (100) upon boot-up of the operating system and thereafter runs constantly as a background process.

**12.** The control system (10) of claim 10, wherein the performance of the method consumes less than five percent of the total CPU processing utilization of the computer (12, 18, 20).

**13.** The control system (10) of claim 9, wherein in the method, the step of receiving (104) threshold criteria for data collection is performed through a graphical user interface, GUI.

**14.** The control system (10) of claim 9, wherein the threshold criteria comprise a CPU usage limit for each computer (12, 18, 20), and wherein when the CPU usage limit is exceeded for one of the computers (12, 18, 20), the additional data that is collected comprises call frames of top thread consumers of the CPU of the one of the computers (12, 18, 20).

**15.** The control system (10) of claim 9, wherein the data acquisition computer (20) communicates with the one or more RTUs (22) using distributed network protocol, DNP.

**16.** The control system (10) of claim 9, wherein the monitoring tool (50) in the data acquisition computer (20) communicates with the monitoring tool (50) in the application computer (18).

**Patentansprüche**

**1.** Computerimplementiertes Verfahren zum Überwachen des Betriebs eines Steuersystems (10), angepasst zum Überwachen und Steuern eines Leistungszuführungsbetriebs, wobei das Steuersystem (10) eine Vielzahl von Computern (12, 18, 20) aufweist, jeder der Computer (12, 18, 20) eine Zentralverarbeitungseinheit, CPU, mit einem darin ausgeführten Betriebssystem aufweist und jedes der Betriebssysteme eine oder mehrere Kernelschnittstellen aufweist, das Verfahren umfassend:

(a.) Bestimmen (102), welche Prozesse in jedem Computer (12, 18, 20) ausgeführt werden;
(b.) Empfangen (104) von Schwellenwertkriterien für Datenerfassung;
(c.) Erfassen (106) anfänglicher Daten basierend auf den in jedem Computer (12, 18, 20) ausgeführten Prozessen;
(d.) Zeitstempeln (106) der anfänglichen Daten;
(e.) Bestimmen (110), ob die anfänglichen Daten eines der Schwellenwertkriterien erfüllen;
(f.) wenn die anfänglichen Daten eines der Schwellenwertkriterien erfüllen, Erfassen (112, 106) zusätzlicher Daten basierend auf den Schwellenwertkriterien, die erfüllt wurden;
(g.) Zeitstempeln (106) der zusätzlichen Daten;
(h.) Korrelieren der anfänglichen Daten und der zusätzlichen Daten unter Verwendung der Zeitstempel und/oder von Charakteristika der ausgeführten Prozesse; und

wobei die Kernelschnittstellen verwendet werden, die anfängliche Menge von Daten und die zusätzlichen Daten zu erfassen.

**2.** Verfahren nach Anspruch 1, wobei das Verfahren durchgeführt wird, während das Steuersystem (10) den Leistungszuführungsbetrieb steuert und überwacht.

**3.** Verfahren nach Anspruch 2, wobei jeder der Computer (12, 18, 20) das Verfahren durchführt, wobei die Performanz des Verfahrens durch jeden Computer (12, 18, 20) weniger als fünf Prozent der CPU-Verarbeitungsnutzung des Computers (12, 18, 20) verbraucht.

**4.** Verfahren nach Anspruch 2, wobei das Steuersystem (10) ein SCADA-System ist und die Computer (12, 18, 20) einen oder mehrere Datenerfassungsserver-Computer (20) umfassen.

**5.** Verfahren nach Anspruch 4, wobei das Steuersystem (10) eine Vielzahl von entfernten Endgeräteinheiten, RTUs, (22) umfasst, die mit dem einen oder den mehreren Datenerfassungsserver-Computer (20) unter Verwendung des verteilten Netzwerkprotokolls, DNP, kommunizieren.

**6.** Verfahren nach Anspruch 1, wobei der Schritt des Korrelierens umfasst, die Prozesse zu bestimmen, die zur gleichen Zeit ausgeführt werden, wie aus den Zeitstempeln bestimmt.

7. Verfahren nach Anspruch 1, wobei der Schritt des Empfangens (104) von Schwellenwertkriterien für Datenerfassung durch eine grafische Benutzerschnittstelle, GUI, durchgeführt wird.

8. Verfahren nach Anspruch 1, wobei die Schwellenwertkriterien eine CPU-Nutzungsgrenze für jeden Computer (12, 18, 20) umfassen und wobei, wenn die CPU-Nutzungsgrenze für einen der Computer (12, 18, 20) überschritten wird, die zusätzlichen Daten, die erfasst werden, Aufrufrahmen von hohen Threadverbrauchern der CPU eines der Computer (12, 18, 20) umfassen.

9. Steuersystem (10), angepasst zum Überwachen und Steuern eines Leistungszuführungsbetriebs, das Steuersystem (10) umfassend:

Feldausrüstung;
eine oder mehrere mit der Feldausrüstung assoziierte entfernte Endgeräteinheiten, RTUs, (22);
eine Vielzahl von Computern (12, 18, 20), enthaltend einen Datenerfassungscomputer (20), angepasst zum Empfangen von Daten von der einen oder den mehreren RTUs (22), und einen Anwendungscomputer (18), funktionsfähig zum Ausführen einer Anwendung zum Steuern einer oder mehrerer der Feldvorrichtungen, jeder der Computer (12, 18, 20) umfassend eine Zentralverarbeitungseinheit, CPU, und computerlesbare Medien, enthaltend Betriebssystemsoftware mit einer oder mehreren Kernelschnittstellen, und ein Überwachungswerkzeug (50), das, wenn es durch die CPU ausgeführt wird, ein Verfahren des Überwachens des Betriebs des Computers (12, 18, 20) durchführt, das Verfahren umfassend:

(a.) Bestimmen (102), welche Prozesse in jedem Computer (12, 18, 20) ausgeführt werden;
(b.) Empfangen (104) von Schwellenwertkriterien für Datenerfassung;
(c.) Erfassen (106) anfänglicher Daten basierend auf den in dem Computer (12, 18, 20) ausgeführten Prozessen;
(d.) Zeitstempeln (106) der anfänglichen Daten;
(e.) Bestimmen (110), ob die anfänglichen Daten eines der Schwellenwertkriterien erfüllen;
(f.) wenn die anfänglichen Daten eines der Schwellenwertkriterien erfüllen, Erfassen (112, 106) zusätzlicher Daten basierend auf den Schwellenwertkriterien, die erfüllt wurden;
(g.) Zeitstempeln (106) der zusätzlichen Daten;
(h.) Korrelieren der anfänglichen Daten und der zusätzlichen Daten unter Verwendung der Zeitstempel und/oder von Charakteristika der ausgeführten Prozesse; und

wobei die Kernelschnittstellen verwendet werden, die anfängliche Menge von Daten und die zusätzlichen Daten zu erfassen.

10. Steuersystem (10) nach Anspruch 9, wobei das Verfahren durchgeführt wird, während das Steuersystem (10) den Leistungszuführungsbetrieb steuert und überwacht.

11. Steuersystem (10) nach Anspruch 10, wobei in jedem Computer (12, 18, 20) das Überwachungswerkzeug (50) nach dem Hochfahren des Betriebssystems automatisch beginnt, ausgeführt (100) zu werden und danach konstant als Hintergrundprozess ausgeführt wird.

12. Steuersystem (10) nach Anspruch 10, wobei die Performanz des Verfahrens weniger als fünf Prozent der gesamten CPU-Verarbeitungsnutzung des Computers (12, 18, 20) verbraucht.

13. Steuersystem (10) nach Anspruch 9, wobei in dem Verfahren der Schritt des Empfangens (104) von Schwellenwertkriterien für Datenerfassung durch eine grafische Benutzerschnittstelle, GUI, durchgeführt wird.

14. Steuersystem (10) nach Anspruch 9, wobei die Schwellenwertkriterien eine CPU-Nutzungsgrenze für jeden Computer (12, 18, 20) umfassen und wobei, wenn die CPU-Nutzungsgrenze für einen der Computer (12, 18, 20) überschritten wird, die zusätzlichen Daten, die erfasst werden, Aufrufrahmen von hohen Threadverbrauchern der CPU eines der Computer (12, 18, 20) umfassen.

15. Steuersystem (10) nach Anspruch 9, wobei der Datenerfassungscomputer (20) mit der einen oder den mehreren RTUs (22) unter Verwendung des verteilten Netzwerkprotokolls, DNP, kommuniziert.

16. Steuersystem (10) nach Anspruch 9, wobei das Überwachungswerkzeug (50) in dem Datenerfassungscomputer (20) mit dem Überwachungswerkzeug (50) in dem Anwendungscomputer (18) kommuniziert.

**Revendications**

1.  Procédé mis en oeuvre sur ordinateur consistant à surveiller le fonctionnement d'un système de commande (10) conçu pour surveiller et commander une opération de fourniture d'énergie, le système de commande (10) comportant une pluralité d'ordinateurs (12, 18, 20) chacun des ordinateurs (12, 18, 20) comportant une unité centrale, CPU, avec un système d'exploitation s'exécutant sur celle-ci et chacun des systèmes d'exploitation comportant plusieurs interfaces de noyau, le procédé comprenant :

    (a.) la détermination (102) des traitements qui s'exécutent sur chaque ordinateur (12, 18, 20),
    (b.) la réception (104) de critères de seuil en vue d'un recueil de données,
    (c.) le recueil (106) de données initiales sur la base des traitements s'exécutant sur chaque ordinateur (12, 18, 20),
    (d.) le marquage horaire (106) des données initiales,
    (e.) la détermination (110) de ce que les données initiales satisfont l'un quelconque des critères de seuil,
    (f.) si les données initiales satisfont l'un quelconque des critères de seuil, le recueil (112, 106) de données supplémentaires sur la base du critère de seuil qui a été satisfait,
    (g.) le marquage horaire (106) des données supplémentaires,
    (h.) la corrélation des données initiales avec les données supplémentaires en utilisant les marqueurs horaires et/ou les caractéristiques des traitements en cours d'exécution, et

    dans lequel les interfaces de noyau sont utilisées pour recueillir le jeu initial de données et les données supplémentaires.

2.  Procédé selon la revendication 1, le procédé étant exécuté alors que le système de commande (10) contrôle et surveille l'opération de fourniture d'énergie.

3.  Procédé selon la revendication 2, dans lequel chacun des ordinateurs (12, 18, 20) exécute le procédé, les performances du procédé par chaque ordinateur (12, 18, 20) consommant moins de cinq pour cent de l'utilisation en traitement de l'unité centrale CPU de l'ordinateur (12, 18, 20) .

4.  Procédé selon la revendication 2, dans lequel le système de commande (10) est un système de type SCADA, et les ordinateurs (12, 18, 20) comprennent un ou plusieurs ordinateurs (20) utilisés comme serveurs d'acquisition de données.

5.  Procédé selon la revendication 4, dans lequel le système de commande (10) comprend une pluralité d'unités terminales distantes, RTU, (22) qui communiquent avec le ou les ordinateurs serveurs d'acquisition de données (20) en utilisant un protocole de réseau réparti, DNP.

6.  Procédé selon la revendication 1, dans lequel l'étape de corrélation comprend la détermination des traitements qui s'exécutent en même temps comme cela est déterminé à partir des marqueurs horaires.

7.  Procédé selon la revendication 1, dans lequel l'étape de réception (104) de critères de seuil pour le recueil de données est effectuée par l'intermédiaire d'une interface graphique utilisateur, GUI.

8.  Procédé selon la revendication 1, dans lequel les critères de seuils comprennent une limite d'utilisation d'une unité centrale pour chaque ordinateur (12, 18, 20), et dans lequel, lorsque la limite d'utilisation d'une unité centrale est dépassée pour l'un des ordinateurs (12, 18, 20), les données supplémentaires qui sont recueillies comprennent des trames d'appels de consommateurs de fils de traitement de niveau supérieur de l'unité centrale de l'un des ordinateurs (12, 18, 20).

9.  Système de commande (10) conçu pour surveiller et commander une opération de fourniture d'énergie, le système de commande (10) comprenant :

    un équipement de terrain,
    une ou plusieurs unités terminales distantes, RTU, (22) associées à l'équipement de terrain,
    une pluralité d'ordinateurs (12, 18, 20) incluant un ordinateur d'acquisition de données (20) conçu pour recevoir des données en provenance de la ou des unités RTU (22) et d'un ordinateur d'application (18) mis en oeuvre pour exécuter une application permettant de commander un ou plusieurs des dispositifs de terrain, chacun des ordinateurs (12, 18, 20) comprenant une unité centrale, CPU, et des supports pouvant être lus par ordinateur contenant un logiciel de système d'exploitation comportant une ou plusieurs interfaces de noyau ainsi qu'un outil de surveillance (50), lequel, lorsqu'il est exécuté par l'unité centrale CPU, réalise un procédé de surveillance du fonctionnement de l'ordinateur (12, 18, 20), le procédé comprenant :

(a.) la détermination (102) des traitements qui s'exécutent sur chaque ordinateur (12, 18, 20),
(b.) la réception (104) de critères de seuil en vue d'un recueil de données,
(c.) le recueil (106) de données initiales sur la base des traitements s'exécutant sur l'ordinateur (12, 18, 20),
(d.) le marquage horaire (106) des données initiales,
(e.) la détermination (110) de ce que les données initiales satisfont l'un quelconque des critères de seuil,
(f.) si les données initiales satisfont l'un quelconque des critères de seuil, le recueil de données (112, 106) supplémentaires sur la base du critère de seuil qui a été satisfait,
(g.) le marquage horaire (106) des données supplémentaires,
(h.) la corrélation des données initiales avec les données supplémentaires en utilisant les marqueurs horaires et/ou les caractéristiques des traitements en cours d'exécution, et

dans lequel les interfaces de noyau sont utilisées pour recueillir le jeu initial de données et les données supplémentaires.

10. Système de commande (10) selon la revendication 9, dans lequel le procédé est effectué alors que le système de commande (10) contrôle et surveille l'opération de fourniture d'énergie.

11. Système de commande (10) selon la revendication 10, dans lequel, dans chaque ordinateur (12, 18, 20), l'outil de surveillance (50) démarre automatiquement l'exécution (100) lors de l'amorçage du système d'exploitation et ensuite s'exécute de manière constante comme un traitement d'arrière-plan.

12. Système de commande (10) selon la revendication 10, dans lequel les performances du procédé consomment moins de cinq pour cent de l'utilisation totale de traitement de l'unité centrale CPU de l'ordinateur (12, 18, 20).

13. Système de commande (10) selon la revendication 9, dans lequel, dans le procédé, l'étape de réception (104) de critères de seuil pour le recueil de données est effectuée par l'intermédiaire d'une interface graphique utilisateur, GUI.

14. Système de commande (10) selon la revendication 9, dans lequel les critères de seuils comprennent la limite d'utilisation d'une unité centrale pour chaque ordinateur (12, 18, 20), et dans lequel, lorsque la limite d'utilisation d'une unité centrale est dépassée pour l'un des ordinateurs (12, 18, 20), les données supplémentaires qui sont recueillies comprennent des trames d'appels de consommateurs de fils de traitement de niveau supérieur de l'unité centrale de l'un des ordinateurs (12, 18, 20).

15. Système de commande (10) selon la revendication 9, dans lequel l'ordinateur d'acquisition de données (20) communique avec la ou les unités RTU (22) en utilisant un protocole de réseau réparti, DNP.

16. Système de commande (10) selon la revendication 9, dans lequel l'outil de surveillance (50) situé dans l'ordinateur d'acquisition de données (20) communique avec l'outil de surveillance (50) situé dans l'ordinateur d'application (18).

Fig. 1

EP 2 324 406 B1

**Fig. 2**

Fig. 3

| Date | Time | PID | Nice | Mem | State | Util | Command |
|------|------|-----|------|-----|-------|------|---------|
| 2008/04/02 | 00:12:22 | 1180 | 0 | 74M | sleep | 0.40 | oracle |
| 2008/04/02 | 00:12:26 | 515686 | 0 | 2146K | sleep | 2.70 | scopeux |
| 2008/04/02 | 00:12:26 | 205177 | 0 | 27M | WAIT | 2.50 | oracle |
| 2008/04/02 | 00:12:26 | 205150 | 0 | 17M | run | 2.00 | oracle |
| 2008/04/02 | 00:12:26 | 43437 | 0 | 25M | run | 1.90 | abbperf |
| 2008/04/02 | 00:12:26 | 262806 | 0 | 3448K | sleep | 0.90 | tnslsnr |
| 2008/04/02 | 00:12:26 | 174363 | -20 | 22M | sleep | 0.80 | collect |
| 2008/04/02 | 00:12:26 | 205067 | 0 | 15M | sleep | 0.60 | oracle |
| 2008/04/02 | 00:12:26 | 79660 | 0 | 176M | WAIT | 0.30 | oracle |
| 2008/04/02 | 00:12:30 | 205150 | 0 | 32M | run | 70.60 | oracle |
| 2008/04/02 | 00:12:30 | 205177 | 0 | 27M | WAIT | 2.30 | oracle |
| 2008/04/02 | 00:12:30 | 43437 | 0 | 25M | run | 1.30 | abbperf |
| 2008/04/02 | 00:12:30 | 205067 | 0 | 16M | run | 0.60 | oracle |
| 2008/04/02 | 00:12:30 | 516924 | 0 | 196M | sleep | 0.40 | oracle |
| 2008/04/02 | 00:12:30 | 516814 | 0 | 161M | sleep | 0.40 | oracle |
| 2008/04/02 | 00:12:30 | 515686 | 0 | 2146K | run | 0.30 | scopeux |
| 2008/04/02 | 00:12:30 | 516758 | 0 | 194M | sleep | 0.30 | oracle |
| 2008/04/02 | 00:12:35 | 205150 | 0 | 42M | sleep | 53.70 | oracle |
| 2008/04/02 | 00:12:35 | 205177 | 0 | 28M | WAIT | 2.10 | oracle |
| 2008/04/02 | 00:12:35 | 43437 | 0 | 25M | run | 1.70 | abbperf |
| 2008/04/02 | 00:12:35 | 515686 | 0 | 2146K | sleep | 0.80 | scopeux |
| 2008/04/02 | 00:12:35 | 516814 | 0 | 161M | sleep | 0.60 | oracle |
| 2008/04/02 | 00:12:35 | 205067 | 0 | 17M | sleep | 0.50 | oracle |
| 2008/04/02 | 00:12:35 | 516614 | 0 | 180M | sleep | 0.30 | oracle |
| 2008/04/02 | 00:12:35 | 516852 | 0 | 161M | sleep | 0.20 | oracle |
| 2008/04/02 | 00:12:39 | 205067 | 0 | 18M | run | 5.70 | oracle |

**Fig. 4**

# Fig. 5

**Fig. 6**

**EP 2 324 406 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6145098 A